# EUROPÄISCHE PATENTSCHRIFT

(11) **EP 4 455 417 B1**
(45) Veröffentlichungstag und Bekanntmachung des Hinweises auf die Patenterteilung: **21.10.2026**
(21) Anmeldenummer: 22455002.0
(22) Anmeldetag: 21.11.2022
(51) Int. Cl.: E04B 1/343, E04B 1/348, E04B 1/58

(54) **BAUKASTENSYSTEM FUER DIE HERSTELLUNG VON MODULAREN STRUKTUREN**
MODULAR SYSTEM FOR THE PRODUCTION OF MODULAR STRUCTURES
SYSTÈME MODULAIRE POUR LA FABRICATION DE STRUCTURES MODULAIRES

(30) Priorität: 25.11.2021 AT 509432021
(43) Veröffentlichungstag der Anmeldung: 30.10.2024
(73) Patentinhaber: Hochpöchler, Leopold, 3340 Waidhofen an der Ybbs (AT)
(72) Erfinder: Hochpöchler, Leopold, 3340 Waidhofen an der Ybbs (AT)
(74) Vertreter: Speringer, Markus

(56) Entgegenhaltungen:
- US-A1- 2005 034 390
- US-A1- 2009 087 255

## Beschreibung

### Technisches Gebiet

Die Erfindung betrifft ein Baukastensystem für die Herstellung von modularen Strukturen in Form von Fertigbauteilen für Gebäude, umfassend längliche Profilelemente, Eckverbindungselemente und Klemmbacken, wobei die länglichen Profilelemente mit den Eckverbindungselementen zu miteinander verbindbaren Moduleinheiten verbindbar sind, wobei die Moduleinheiten sowohl zur Ausbildung von Bodenelementen, Deckenelementen und/oder Wandelementen geeignet sind.

### Stand der Technik

Baukastensysteme oder kit-of-parts für die Herstellung modularer Strukturen aus standardisierten Komponenten in kontrollierten Werkstattumgebungen sind insbesondere bei der Herstellung von Fertigbauteilen für Gebäude wünschenswert. Durch ein Baukastensystem können Moduleinheiten mit Bodenelementen, Deckenelementen und/oder Wandelementen vorgefertigt werden, wobei die einzelnen Moduleinheiten bereits alle Einbauten und Ausstattungsmerkmale aufweisen und am Aufstellungsort schnell und kostengünstig zu einem fertigen Gebäude zusammengefügt werden können. Derartige Systeme sind im Stand der Technik bekannt, konnten sich aber oft am Markt nicht durchsetzen, da die Elemente der Baukastensysteme zu aufwändig und vielfältig und/oder die fertigen Moduleinheiten für mehrstöckige Strukturen nicht stabil genug sind.

Die WO 2015/164975 A1 zeigt ein strukturelles Verbindungselement für modulare Gebäude. Die gezeigten einzelnen Komponenten sind sehr aufwändig gestaltet und damit teuer herzustellen. Das gezeigte Eckelement weist jeweils Einschuböffnungen für Vierkantprofilrohre auf, welche in oder an dem Eckelement fixiert werden können. Zur Verbindung einzelner Modulelemente übereinander werden weitere Fixierplatten benötigt. Eine zusätzliche Stabilisierung der Steher untereinander ist nicht vorgesehen. Insgesamt ist das System sehr aufwändig und durch die Vielzahl der unterschiedlichen Teile ergibt sich kein deutlicher wirtschaftlicher Vorteil.

Die WO 2021/163804 A1 zeigt eine weitere Variante einer Verbindungsanordnung für modulare Bauten. Die Eckverbindungselemente werden hier an den Stirnseiten der senkrechten Steher gelagert und weisen davon abstehende Winkelflächen für die Montage der horizontalen Träger auf. Die Eckverbindungselemente weisen daher einen komplexeren Aufbau auf und sind aufwändig in der Herstellung. Die Kraftübertragung zwischen senkrechten und horizontalen Trägern muss über einen kleinen Bereich des Eckverbindungselements erfolgen und ist daher auch hinsichtlich der Stabilität unvorteilhaft.

Die WO 2020/010463 A1 zeigt eine weitere Verbindungsanordnung für modulare Gebäude. Hier benötigt es zwei separate Eckverbindungselemente zum Verbinden der horizontalen und vertikalen Balken bzw. Steher untereinander. Der Aufbau der einzelnen im wesentlichen flach aufgebauten Verbindungselemente ist einfach gehalten, jedoch bieten diese ebenfalls keine gute Kraftübertragung zwischen den horizontalen Balken und den senkrechten Stehern.

Die DE 102015005762 A1 zeigt ein Verbindungselement zum horizontalen Verbinden der senkrechten Steher mehrerer Container untereinander. Konkrete Ausführungen für Eckverbindungselemente der Container selbst sind nicht offenbart.

Die WO 2019/034279 A1 zeigt eine weitere Variante eines modularen Systems zur Herstellung von Strukturen für die Erstellung von Moduleinheiten. Hier sind die einzelnen Verbindungselemente deutlich einfacher aufgebaut, jedoch gibt es kein stabilisierendes Eckelement. Die einzelnen Profile werden jeweils immer nur mit dem benachbarten Profil über kleine Konnektoren verbunden, wodurch es zu keiner weiteren Stabilisierung der Moduleinheiten insbesondere im Eckbereich und bei der Verbindung mehrerer Moduleinheiten untereinander kommt. Auch mit diesem System kann statischen Erfordernissen insbesondere auch bei mehrstöckigen Bauwerken nicht ausreichend entsprochen werden.

### Kurzbeschreibung der Erfindung

Aufgabe der vorliegenden Erfindung ist es somit, ein Baukastensystem zu schaffen, welches die oben genannten Nachteile beseitigt und mit nur wenigen einfach zu fertigenden Elementen auskommt, um die Produktionskosten gering zu halten. Dabei soll weiterhin eine maximale Flexibilität bei der Ausgestaltung der einzelnen Moduleinheiten gegeben sein. Insbesondere in den Bereichen hoher Belastungen, wie im Eckbereich oder bei der Verbindung der einzelnen Moduleinheiten untereinander sollen die Elemente eine besonders hohe Stabilität aufweisen und die auftretenden Lasten optimal über redundante Bereiche der angrenzenden Profile ableiten können.

Diese Aufgabe wird erfindungsgemäß mit einem Baukastensystem mit den Merkmalen von Anspruch 1 gelöst. Es wird dabei offengelegt, dass Eckverbindungselemente zwei rechtwinkelig zueinander ausgerichtete erste plattenförmige Befestigungsabschnitte und zwei rechtwinkelig zueinander ausgerichtete zweite plattenförmige Befestigungsabschnitte umfassen, wobei die ersten plattenförmigen Befestigungsabschnitte jeweils in die Enden eines dem jeweiligen Befestigungsabschnitt zugeordneten länglichen Profilelements einführbar und mit diesem fixierbar sind, und wobei die zweiten plattenförmigen Befestigungsabschnitte eine gemeinsame Innenkante ausbilden, in welcher ein weiteres längliches Profilelement mit einem Endabschnitt anordenbar und das weitere längliche Profilelement über zwei in das Profilelement einführbare Klemmbacken an den beiden zweiten plattenförmigen Befestigungsabschnitten fixierbar ist. Das Eckverbindungselement kann im einfachsten Fall aus im Wesentlichen X-förmig zueinander angeordneten ersten und zweiten plattenförmigen Befestigungsabschnitten aufgebaut sein. Die beiden ersten plattenförmigen Befestigungsabschnitte werden in zwei rechtwinkelig zueinander angeordnete längliche Profilelemente eingeführt und mit diesen beispielsweise verschraubt, wodurch die Ecke eines Boden- oder Deckenelements ausgebildet wird. Die als Steher dienenden länglichen Profilelemente, welche die Boden- oder Deckenelemente zu einem kompletten Raumelement zusammenfügen, werden im Innenwinkel der zweiten plattenförmigen Befestigungsabschnitte angeordnet. In die als Steher dienenden länglichen Profilelemente werden Klemmbacken eingeführt, welche dann ebenfalls beispielsweise mittels Schrauben an den zweiten plattenförmigen Befestigungsabschnitten fixiert werden. Obwohl das Eckverbindungselement sehr einfach aufgebaut ist und damit sehr günstig gefertigt werden kann, ermöglicht es dennoch eine hochstabile Eckverbindung, da alle drei aufeinandertreffenden länglichen Profilelemente starr mit dem gemeinsamen Eckverbindungselement verbunden sind und über die plattenförmigen Befestigungsabschnitte die auftretenden Balastungen großflächig übertragbar sind.

Bei einer bevorzugten Variante der Eckverbindungselemente ist es vorgesehen, dass die ersten und zweiten plattenförmigen Befestigungsabschnitte im Wesentlichen X-förmig zueinander ausgerichtet sind, wobei im Bereich des Kreuzungspunktes der Befestigungsabschnitte im Eckverbindungselement ein verstärkter Kernabschnitt vorgesehen ist, welcher eine Verbindungsposition für ein diagonales Spannelement aufweist. Die Verbindungsposition im verstärkten Kernabschnitt kann beispielsweise eine Gewindebohrung sein, an welcher ein diagonales Spannelement mittels einer Schraube befestigbar ist. Dadurch können beispielsweise bei Deckenelementen die Belastungen noch besser verteilt werden, indem innerhalb eines Deckenelements diagonal zueinander angeordnete Eckverbindungselemente miteinander verbunden werden. Insbesondere auch bei mehrstöckiger Anordnung der Moduleinheiten verbessert dies die Statik des Gesamtbauwerks. Es versteht sich für den Durchschnittsfachmann, dass die Befestigungsposition beispielsweise auch durch einen Gewindebolzen mit einer daran anordenbaren Mutter oder durch ein anderes Befestigungsmittel realisiert werden kann.

Gemäß einem weiteren bevorzugten Merkmal ist es vorgesehen, dass die waagrecht anordenbaren länglichen Profilelemente, die mit den ersten plattenförmigen Befestigungsabschnitten verbindbar sind, Hohlprofile mit im gesamten Bereich gleicher Wandstärke sind, wobei die Hohlprofile einen doppel-T-förmigen Querschnitt aufweisen mit einem im Einbauzustand senkrecht ausgerichteten mittleren Abschnitt, in welchen die ersten plattenförmigen Befestigungsabschnitte einführbar sind, und mit jeweils am mittleren Abschnitt angrenzenden Kopf- bzw. Fußabschnitten, welche die Querbalken der doppel-T-Form ausbilden. Ein derartiges Profil kann einfach und kostengünstig gefertigt werden und bietet eine hohe Stabilität. Der senkrecht ausgerichtete mittlere Abschnitt weist dabei eine innere lichte Weite in waagrechter Richtung auf, die in etwa der Dicke des ersten plattenförmigen Befestigungsabschnitts entspricht, sodass dieser Abschnitt in das längliche Profilelement eingeführt werden kann. Die beiden Seitenwände des senkrechten mittleren Abschnitts sollen dabei im Einbauzustand flächig an den ersten plattenförmigen Befestigungsabschnitten zur Anlage kommen, damit eine maximale Fläche zur Lastübertragung gegeben ist.

Dabei ist es bei einem Typ der länglichen Profilelemente ein weiteres bevorzugtes Merkmal, dass der Fußabschnitt der waagrecht anordenbaren länglichen Profilelemente, die mit den ersten plattenförmigen Befestigungsabschnitten verbindbar sind, und welche speziell im Bereich eines Deckenelements einsetzbar sind, in vertikaler Richtung eine geringere Höhe aufweisen als der Kopfabschnitt des betreffenden länglichen Profilelements. Da der Fußabschnitt der länglichen Profilelemente speziell bei Deckenelementen einer geringen Belastung ausgesetzt ist, kann dieser dünner ausgestaltet werden. Dies erlaubt auch die Anordnung entsprechender Deckenverkleidungen, ohne dass die Raumhöhe innerhalb eines Modulelements zu weit reduziert werden muss.

Hinsichtlich der als senkrechte Steher vorgesehenen länglichen Profilelemente ist es ein weiteres bevorzugtes Merkmal, dass die senkrecht anordenbaren länglichen Profilelemente, die mit den zweiten plattenförmigen Befestigungsabschnitten verbindbar sind, Hohlprofile mit im Wesentlichen rechteckigem, bevorzugt quadratischem Querschnitt sind, wobei zwei benachbarte Seitenwände des Hohlprofils im Einbauzustand im Endabschnitt des Profilelements an den zweiten plattenförmigen Befestigungsabschnitten anliegen und die beiden anderen Seitenwände jeweils beidseitig hinterschnittene Längsnuten aufweisen. Diese Profilform ist ebenfalls einfach herzustellen und bietet eine hohe Stabilität.

Zum seitlichen Verbinden einzelner Moduleinheiten untereinander ist es ein weiteres bevorzugtes Merkmal, dass Verbindungselemente zum Verbinden der senkrecht anordenbaren länglichen Profilelemente mit benachbarten senkrecht anordenbaren länglichen Profilelementen vorgesehen sind, wobei das Verbindungselement ein Längsprofil umfasst, welches im Querschnitt zwei randseitige verbreiterte Abschnitte aufweist, die formschlüssig in die beidseitig hinterschnittenen Nuten zweier benachbarter senkrecht anordenbarer länglicher Profilelemente einsetzbar sind. Die zuvor beschriebenen beidseitig hinterschnittenen Längsnuten der als Steher angeordneten Längsprofile werden bei nebeneinander angeordneten Moduleinheiten zueinander ausgerichtet. Bei beispielsweise vier zueinander ausgerichteten Moduleinheiten kommen die vier in der Mitte liegenden Ecksteher nebeneinander zusammen, wobei jeder Ecksteher mit seinen beidseitig hinterschnittenen Längsnuten jeweils zu zwei benachbarten Eckstehern hin ausgerichtet ist. Die als Längsprofil ausgebildeten Verbindungselemente werden von oben in die Längsnuten eingeführt und verbinden jeweils zwei senkrechte Steher miteinander. In Summe werden also im mittleren Bereich des oben genannten Beispiels vier Verbindungselemente benötigt. Die Verbindungselemente richten die einzelnen Modulelemente zueinander aus, und versteifen die gesamte Konstruktion, sodass die vier zusammenstehenden senkrechten Steher wie ein massiver Steher wirken und damit hohe Lasten auch bei mehrstöckigen Bauten aufnehmen können. Diese Lösung bietet also aufgrund der vergleichsweise einfach herzustellenden wenigen Baukastenelemente eine deutlich höhere statische Belastbarkeit, als die eingangs genannten Baukastenelemente aus dem Stand der Technik.

Um einzelne Moduleinheiten auch vertikal miteinander zu verbinden, ist es ein weiteres bevorzugtes Merkmal des Baukastensystems, dass ein Modulverbindungselement zur vertikalen Verbindung zweier obereinander angeordneter senkrecht anordenbarer länglicher Profilelemente vorgesehen ist, wobei das Modulverbindungselement einen in das Hohlprofil der länglichen Profilelemente einsetzbaren zentralen Dorn umfasst, und wobei zwei Lastverteilplatten mit zentralen Durchbrüchen im Einbauzustand den zentralen Dorn in etwa mittig kragenförmig umgeben und an den stirnseitigen Enden der beiden verbundenen länglichen Profilelemente anliegen. Dieses Element ist besonders einfach und kostengünstig herzustellen und kann vor Ort beim Zusammenfügen der einzelnen Moduleinheiten einfach eingesetzt werden. Da ein Großteil der auftretenden Lasten über die Eckverbindungselemente und Verbindungselemente zwischen den senkrecht angeordneten Profilelementen auf die tragende Struktur verteilt wird, können die hauptsächlich zum Ausrichten der übereinander anordenbaren Moduleinheiten dienenden Modulverbindungselemente möglichst einfach ausgebildet sein.

Dabei ist es ein weiteres bevorzugtes Merkmal, dass zwischen den beiden Lastverteilplatten eine weitere Platte aus einem elastischen und/oder wärmedämmenden Material angeordnet ist, und dass der oberhalb der Lastverteilplatten liegende Abschnitt des zentralen Dorns von einer oben geschlossenen Hülse aus elastischem und/oder wärmedämmenden Material umgeben ist. Durch diese Anordnung kann auf einfache Weise eine akustische und/oder thermische Entkopplung zwischen den einzelnen Moduleinheiten erreicht werden.

Schließlich ist es ein weiteres bevorzugtes Merkmal, dass innerhalb der als Bodenelement, Deckenelement und/oder Wandelement ausgeformten Moduleinheiten Leerverrohrungen für den Einbau von Elektro-, Heiz-, Kühl- oder Wasserleitungen vorgesehen sind, wobei die Leerverrohrungen rasterförmig durch die jeweilige Moduleinheit von einem länglichen Profilelement zum gegenüberliegenden und/oder bogenförmig zu einem benachbarten länglichen Profilelement hin verlaufen. Die Moduleinheiten können so weitgehend bis zur Endausbaustufe ab Werk vorgefertigt werden. Kabelführungen können in die rasterförmigen Leerverrohrungen je nach Projekt bereits verlegt und vor Ort beim Zusammenfügen der Moduleinheiten miteinander gekoppelt werden. Auch ein nachträglicher Einbau weiterer Leitungen oder Rohre ist aufgrund der vorhandenen Leerverrohrungen einfach möglich.

### Kurze Beschreibung der Zeichnungsfiguren

Die Erfindung wird nun in größerem Detail anhand von Ausführungsbeispielen sowie mit Hilfe der beiliegenden Figuren beschrieben. Dabei zeigen
Fig. 1 eine schematische perspektivische Explosionsansicht im Bereich eines Eckverbindungselements im Bodenbereich,
Fig. 2 eine schematische perspektivische Ansicht eines Bodenelements,
Fig. 3 eine schematische perspektivische Ansicht von schräg unten auf den Eckbereich eines Bodenelements mit daran fixiertem senkrechten länglichen Profilelement,
Fig. 4 eine schematische perspektivische Explosionsansicht im Bereich eines Eckverbindungselements im Deckenbereich,
Fig. 5 eine schematische perspektivische Ansicht eines Deckenelements,
Fig. 6 eine schematische perspektivische Ansicht von schräg oben auf den Eckbereich eines Deckenelements mit daran fixiertem senkrechten länglichen Profilelement,
Fig. 7 eine Querschnittsansicht eines waagrecht anordenbaren länglichen Profilelements im Bodenbereich,
Fig. 8 eine Querschnittansicht eines waagrecht anordenbaren länglichen Profilelements im Deckenbereich,
Fig. 9 eine Querschnittsansicht eines senkrecht anordenbaren länglichen Profilelements,
Fig. 10 eine Querschnittsansicht eines Verbindungselements,
Fig. 11 eine schematische Detailansicht des oberen Eckbereichs von vier zueinander angeordneten Moduleinheiten mit darin montierten Verbindungselementen,
Fig. 12 eine schematische perspektivische Explosionsansicht im Eckbereich zweier übereinander angeordneter Moduleinheiten,
Fig. 13 eine schematische perspektivische Explosionsansicht eines Modulverbindungselements und
Fig. 14 und 15 schematische Ansichten unterschiedlicher Anordnungen von Leerverrohrungen innerhalb einer Moduleinheit.

### Beschreibung der Ausführungsarten

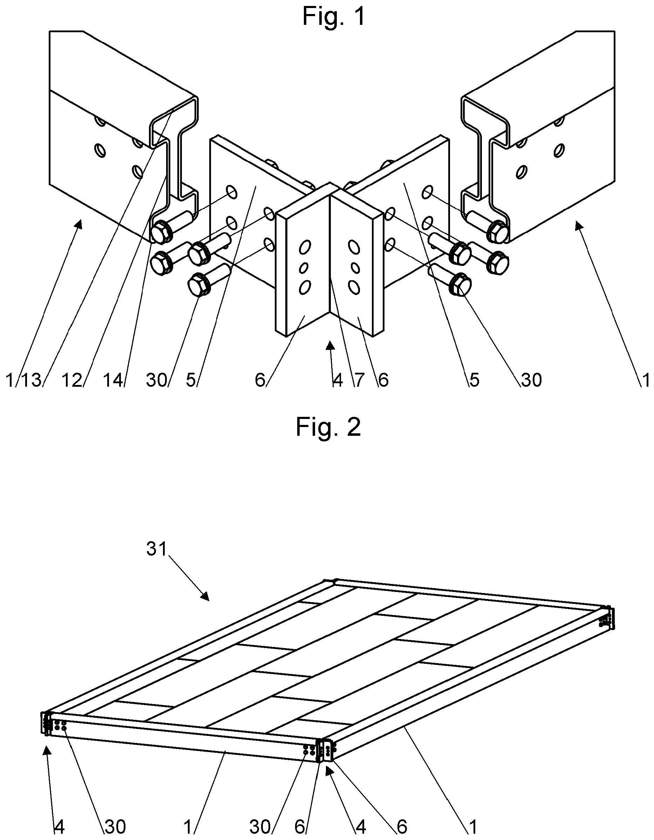

In der Fig. 1 ist schematisch ein Eckverbindungselement 4 eines erfindungsgemäßen Baukastensystems im Eckbereich einer als Bodenelement 31 auszubildenden Moduleinheit dargestellt. Das Eckverbindungselement 4 weist zwei senkrecht zueinander ausgerichtete erste plattenförmige Befestigungsabschnitte 5 und zwei senkrecht zueinander ausgerichtete zweite plattenförmige Befestigungsabschnitte 6 auf. Die plattenförmigen Befestigungsabschnitte 5,6 können kostengünstig beispielsweise aus Stahlplatten gefertigt werden, welche zur Ausbildung des Eckverbindungselements 4 miteinander verbunden werden. Die ersten plattenförmigen Befestigungsabschnitte 5 werden zur Montage in die mittleren Abschnitte 12 von waagrecht anordenbaren länglichen Profilelementen 1 eingeführt, welche hier ebenfalls eingezeichnet sind. Sowohl die ersten plattenförmigen Befestigungsabschnitte 5 als auch die mittleren Abschnitt 12 der länglichen Profilelemente 1 weisen im Einbauzustand miteinander fluchtende Bohrungen auf, in welche Befestigungsmittel 30 in Form von Schrauben einsetzbar sind, um das Eckverbindungselement 4 mit den beiden Profilelementen 1 fest zu verbinden. Die beiden zweiten plattenförmigen Befestigungsabschnitte 6 bilden miteinander eine Innenkante 7 aus, und dienen der Befestigung des Eckverbindungselements 4 mit dem senkrecht anordenbaren als Steher dienenden Profilelement 3. Der gesamte tragende Rahmen eines Modulelements, bestehend aus den unterschiedlichen länglichen Profilelementen 1,2,3, wird also über ein gemeinsames, einfach und sehr robust aufgebautes Eckverbindungselement 4 miteinander fest verbunden.

In Fig. 2 ist schematisch eine als Bodenelement 31 ausgebildete Moduleinheit dargestellt, welche als Tragrahmen vier längliche Profilelemente 1 und vier Eckverbindungselemente 4 aufweist. Innerhalb des Rahmens kann die Moduleinheit mit beliebigen Materialien ausgefacht werden, wodurch das Baukastensystem für unterschiedlichste Bauwerke flexibel einsetzbar und unter Werkstattbedingungen kostengünstig fertigbar ist. Die Konstruktion erlaubt den uneingeschränkten Einsatz von Aluminium-, Stahlleicht-, Trocken-, Vollholz-, Sperrholz-, Holzriegel-, Glas-, Sandwich-, Leichtbeton- und/oder Gasbetonelementen. Um entsprechende brandschutztechnische Bestimmungen zu erfüllen, können die länglichen Profilelemente 1,2,3 auch mit entsprechenden Beschichtungen versehen sein.

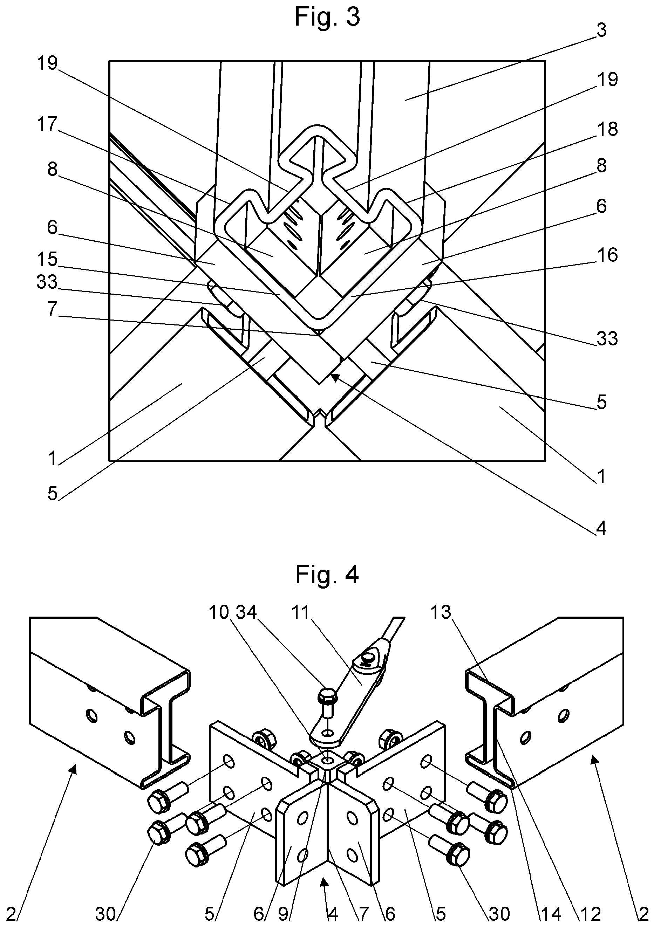

Fig. 3 zeigt in einer perspektivischen Ansicht den Eckbereich einer Moduleinheit von unten. Das als Steher senkrecht anordenbare längliche Profilelement 3 ist mit seinem unteren Endabschnitt an den zweiten plattenförmigen Befestigungsabschnitten 6 angeordnet. Das senkrecht anordenbare längliche Profilelement 3 wird in der Innenkante 7 zwischen den senkrecht zueinander angeordneten zweiten plattenförmigen Befestigungsabschnitten 6 positioniert, sodass die beiden flachen Seitenwände 15,16 des länglichen Profilelements 3 an den zweiten plattenförmigen Befestigungsabschnitten 6 anliegen. In das senkrecht anordenbare längliche Profilelement 3 werden Klemmbacken 8 eingeführt und mittels Befestigungsmittel 33 in Form von Schrauben mit den zweiten plattenförmigen Befestigungsabschnitten 6 fest verbunden.

In Fig. 4 ist der Eckbereich einer als Deckenelement 32 ausgebildeten Moduleinheit in einer schematischen Explosionsansicht dargestellt. Das Eckverbindungselement 4 weist hier neben den ersten und zweiten plattenförmigen Verbindungsabschnitten 5,6 einen verdickten Kernabschnitt 9 auf. An diesem Kernabschnitt 9 befindet sich die Verbindungsposition 10 in Form einer Gewindebohrung zur Montage eines diagonalen Spannelements 11, welches über ein Befestigungsmittel 34 in Form einer Schraube an der Verbindungsposition 10 fixiert werden kann. Die länglichen Profilelemente 1,2,3 werden, wie auch schon bei Fig. 1 beschrieben, am Eckverbindungselement 4 fixiert.

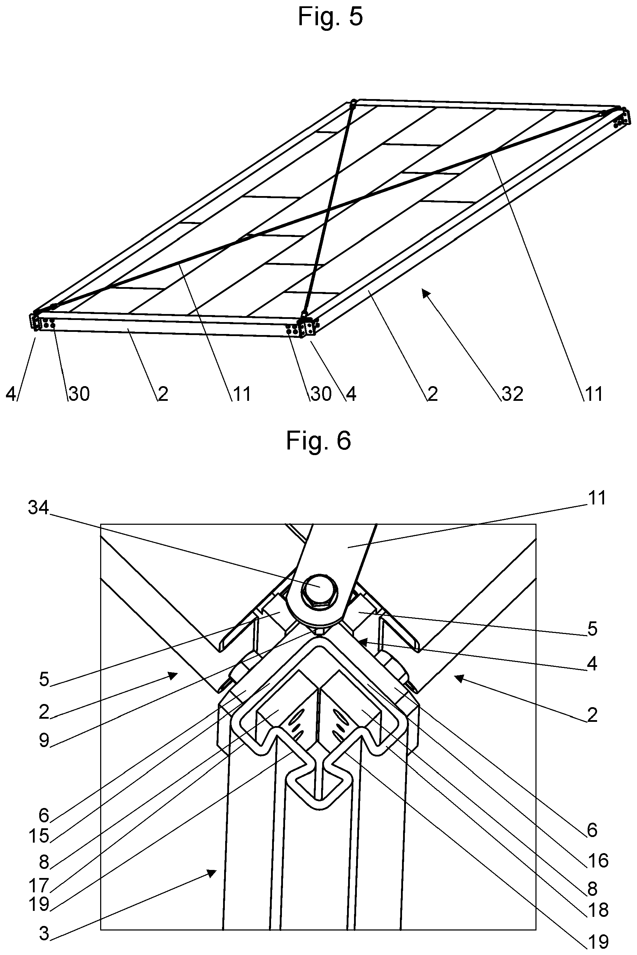

Wie in Fig. 5 ersichtlich, erstrecken sich die diagonalen Spannelemente 11 jeweils von einem Eckverbindungselement 4 zu dem diagonal gegenüberliegenden Eckverbindungselement 4 und bieten so eine weitere Möglichkeit der Lastabtragung innerhalb einer Moduleinheit, wodurch die Konstruktion noch stabiler wird.

In Fig. 6 ist der obere Eckbereich einer Moduleinheit im montierten Zustand in einer perspektivischen Ansicht gezeigt. Das senkrecht anordenbare längliche Profilelement 3 wird auch im oberen Endabschnitt mittels Klemmbacken 8 und entsprechender Befestigungsmittel 33 mit dem Eckverbindungselement 4 verbunden. Alle lastabtragenden Elemente, wie die länglichen Profilelemente 1,2,3 und das diagonale Spannelement 11 sind somit an einem einzigen stabilen und einfach zu fertigenden Eckverbindungselement befestigt, wodurch die gesamte Moduleinheit eine hohe Stabilität erlangt.

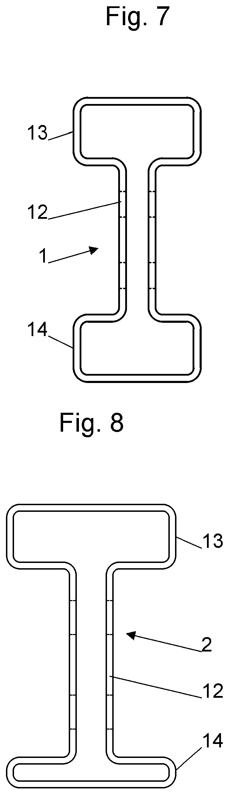

Die Fig. 7 und 8 zeigen einen Querschnitt durch die waagrecht anordenbaren länglichen Profilelemente 1,2. Diese haben im Wesentlichen eine doppel-T-förmige Querschnittsform und bestehen aus einem durchgehenden Metallmantel einheitlicher Dicke. Der dünnere senkrechte mittlere Abschnitt 12 verbindet die jeweils als Querbalken der doppel-T-Form ausgebildeten Kopf- 13 bzw. Fußabschnitte 14. Fig. 7 zeigt eine Querschnittform mit im Wesentlichen symmetrisch ausgeführten Kopf- 13 und Fußabschnitten 14 mit gleicher Höhe in vertikaler Richtung. Längliche Profilelemente 1 dieser Art werden bevorzugt für Bodenelemente 31 eingesetzt. Ein derartiges für ein Bodenelement einsetzbares Profilelement hat beispielsweise eine vertikale Höhe im Bereich von 180 mm bis 220 mm, bevorzugt etwa 200 mm, eine horizontale Breite im Bereich von 80 mm bis 100 mm, bevorzugt etwa 90 mm und eine Wandstärke im Bereich von 3 mm bis 7 mm, bevorzugt etwa 5 mm. Bei der in der Fig. 8 gezeigten Querschnittsform weist der Fußabschnitt 14 eine geringere Höhe in vertikaler Richtung als der Kopfabschnitt 13 auf. Diese Art länglicher Profilelemente 2 werden bevorzugt bei Deckenelementen 32 eingesetzt, da hier beim Fußabschnitt 14 weniger Stabilität erforderlich ist und die geringere Höhe hier beispielsweise eine einfachere Beplankung erlaubt, ohne die Raumhöhe einer Moduleinheit zu sehr zu beschränken. Ein derartiges für ein Deckenelement einsetzbares Profilelement hat beispielsweise eine vertikale Höhe im Bereich von 130 mm bis 180 mm, bevorzugt etwa 150 mm, eine horizontale Breite im Bereich von 80 mm bis 100 mm, bevorzugt etwa 90 mm und eine Wandstärke im Bereich von 2 mm bis 6 mm, bevorzugt etwa 4 mm.

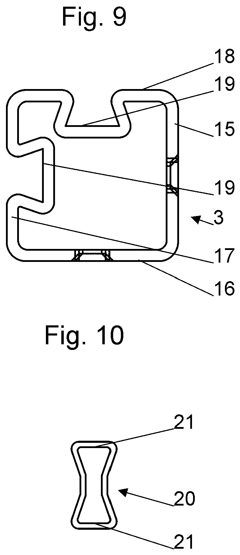

Fig. 9 zeigt eine mögliche Ausführungsform der Querschnittsform eines vertikal als Steher anordenbaren länglichen Profilelements 3. Auch dieses Profilelement 3 wird aus Metall mit einheitlicher Wandstärke gefertigt und weist einen im Wesentlichen rechteckigen Grundquerschnitt auf. Zwei benachbarte Seitenwände 15,16 sind dabei eben ausgeführt. Die verbleibenden beiden Seitenwände 17,18 weisen jeweils entlang des Profils 3 verlaufende beidseitig hinterschnittene Längsnuten 19 auf.

Diese Längsnuten dienen der Aufnahme eines in der Fig. 10 ebenfalls im Querschnitt dargestellten Verbindungselements 20. Das Verbindungselement 20 ist ebenfalls ein längliches Profilelement einheitlicher Wandstärke, welches in der Querschnittsform randseitig verbreiterte Abschnitte 21 aufweist, die formschlüssig in die entsprechenden beidseitig hinterschnittenen Nuten 19 der senkrecht anordenbaren länglichen Profilelemente 3 einsetzbar sind.

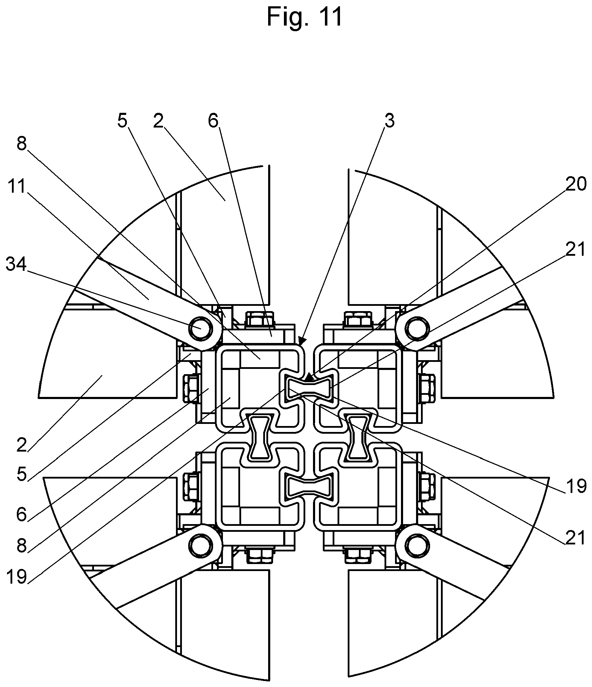

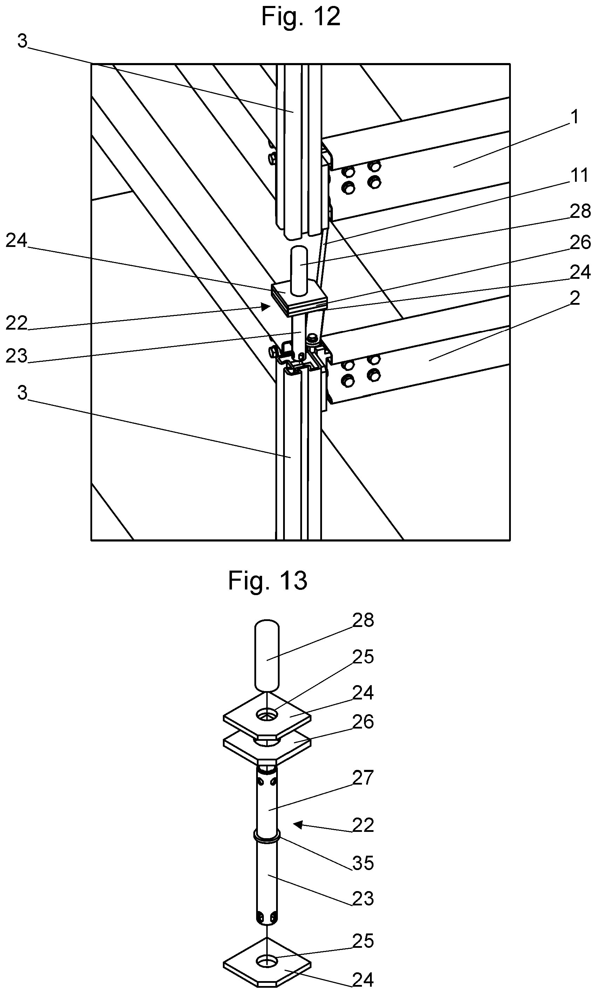

Die genaue Anordung der Verbindungselemente 20 im Einbauzustand ist in der Fig. 11 dargestellt, wo eine Detailansicht eines oberen Eckbereichs von vier nebeneinander angeordneten Moduleinheiten gezeigt ist. Bei den so nebeneinander stehenden senkrecht anordenbaren länglichen Profilelementen 3 sind die Seitenwände 17,18 mit den beidseitig hinterschnittenen Nuten 19 jeweils zueinander gerichtet. Die Verbindungselemente 20 werden von oben mit den randseitig verbreiterten Abschnitten 21 in jeweils zwei der gegenüberliegenden hinterschnittenen Nuten 19 eingeführt und verbinden somit die beiden länglichen Profilelemente 3 über einen Großteil ihrer Länge. Insgesamt werden die vier Steher mit Hilfe von vier Verbindungselementen 20 verbunden. Die Verbindungselemente dienen beim Zusammenfügen der Moduleinheiten auch zum Ausrichten und Zentrieren der senkrecht anordenbaren Profilelemente 3 zueinander und nach der Montage wirken die vier Steher wie eine einzige massive tragende Säule. Durch die verbesserte Lastabtragung muss diese auch nicht allein über ein im Eckbereich angeordnetes Modulverbindungselement 22 (siehe Fig. 12) erfolgen, wie dies bei den Ausführungen gemäß des Standes der Technik der Fall ist.

Aus diesem Grund kann das Modulverbindungselement 22 zur vertikalen Verbindung der einzelnen Moduleinheiten untereinander, wie in den Fig. 12 und 13 gezeigt, auch sehr einfach ausgestaltet sein, was sich wiederum günstig auf die Herstellungskosten des gesamten Baukastensystems auswirkt, da nur sehr wenige und besonders einfach zu fertigende Elemente benötigt werden. In Fig. 12 ist eine schematische Explosionsansicht zweier übereinander angeordneter Moduleinheiten mit einem Modulverbindungselement 22 gezeigt. Das Modulverbindungselement 22 wird mit einem zentralen Dorn 23 in das untere senkrecht anordenbare längliche Profilelement 3 eingeführt. Mittig am Modulverbindungselement 22 befinden sich auskragende Lastverteilplatten 24, welche nach dem Einsetzen auf der oberen Stirnseite des vertikal anordenbaren länglichen Profilelements 3 aufliegen. Der obere Abschnitt 27 des zentralen Dorns 23 ist von einer Hülse 28 umgeben und das obere Modulelement wird darauf abgesenkt, sodass der obere Abschnitt 27 des zentralen Dorns 23 im entsprechenden Endabschnitt des vertikal anordenbaren länglichen Profilelements 3 zum Liegen kommt.

Fig. 13 zeigt den Aufbau eines Modulverbindungselements 22 nochmal im Detail in einer Explosionsansicht. Der zentrale Dorn weist einen mittigen kragenförmigen Anschlag 35 auf. Eine der beiden Lastverteilplatten 24 mit einem zentralen Durchbruch 25 wird von unten auf den Dorn geschoben, bis die Lastverteilplatte 24 am Anschlag 35 anliegt. Der zentrale Durchbruch 25 weist einen geringeren Durchmesser auf als der Außendurchmesser des kragenförmigen Anschlags 35. Auf den oberen Abschnitt 27 des zentralen Dorns 23 wird eine Platte 26 aus elastischem und/oder wärmedämmendem Material, beispielsweise eine Gummiplatte sowie eine weitere Lastverteilplatte 24 aufgeschoben, sodass in der Mitte des Dorns ein Paket aus drei Lagen entsteht. Auf den oberen Abschnitt 27 des zentralen Dorns 23 wird ferner eine oben geschlossene Hülse 28 aufgesetzt, welche ebenfalls aus einem elastischen und/oder wärmedämmenden Material besteht. Beim Zusammensetzen der einzelnen Moduleinheiten sind somit vertikal übereinander angeordnete Moduleinheiten sowohl thermisch als auch akustisch entkoppelt.

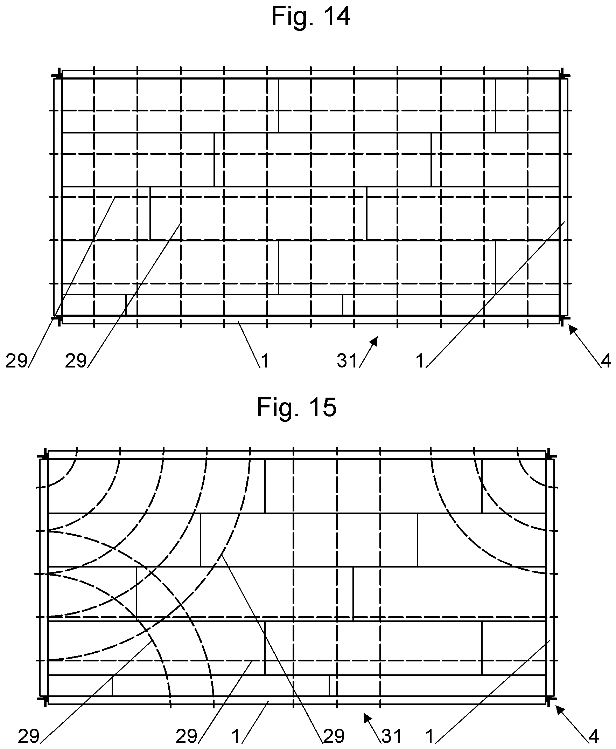

Die Fig. 14 und 15 zeigen schließlich schematisch den Verlauf von Leerverrohrungen 29 innerhalb einer als Bodenelement 31 ausgebildeten Moduleinheit. Die Positionen der einzelnen Leerverrohrungen 29 sind mittels strichlierter Linien dargestellt. In Fig. 14 sind die Leerverrohrungen rasterförmig gleichmäßig verteilt angeordnet und verlaufen somit immer von einem länglichen Profilelement 1 zum jeweils parallel dazu angeordneten gegenüberliegenden Profilelement 1. In Fig. 15 sind die Leerverrohrungen 29 teilweise gerade verlaufend und teilweise bogenförmig verlaufend angeordnet. Die bogenförmig verlaufenden Leerverrohrungen 29 machen dabei eine 90° Kurve und gehen daher von einem länglichen Profilelement 1 zu dem normal dazu angeordneten benachbarten länglichen Profilelement 1. Derartige Anordnungen können natürlich auch in einem Deckenelement oder in einem Wandelement vorgesehen werden. Dadurch wird es möglich, dass die gesamte Haustechnik betreffend Strom, Wasser, Heizungsführung etc. einfach verlegt werden kann und auch im fertig errichteten Gebäude einfach nachrüstbar oder austauschbar ist.

## Patentansprüche

1. Baukastensystem für die Herstellung von modularen Strukturen in Form von Fertigbauteilen für Gebäude, umfassend längliche Profilelemente (1,2,3), Eckverbindungselemente (4) und Klemmbacken (8), wobei die länglichen Profilelemente mit den mit Eckverbindungselementen (4) zu miteinander verbindbaren Moduleinheiten verbindbar sind, wobei die Moduleinheiten sowohl zur Ausbildung von Bodenelementen (31), Deckenelementen (32) und/oder Wandelementen geeignet sind, wobei die Eckverbindungselemente (4) zwei rechtwinkelig zueinander ausgerichtete erste plattenförmige Befestigungsabschnitte (5) und zwei rechtwinkelig zueinander ausgerichtete zweite plattenförmige Befestigungsabschnitte (6) umfassen, und wobei die ersten plattenförmigen Befestigungsabschnitte (5) jeweils in die Enden eines dem jeweiligen Befestigungsabschnitt (5) zugeordneten länglichen Profilelements (1,2) einführbar und mit diesem fixierbar sind, und wobei ferner die zweiten plattenförmigen Befestigungsabschnitte (6) eine gemeinsame Innenkante (7) ausbilden, in welcher ein weiteres längliches Profilelement (3) mit einem Endabschnitt anordenbar ist, wobei das weitere längliche Profilelement (3) über zwei in das Profilelement (3) einführbare Klemmbacken (8) an den beiden zweiten plattenförmigen Befestigungsabschnitten (6) fixierbar ist.

2. Baukastensystem für die Herstellung von modularen Strukturen nach Anspruch 1, **dadurch gekennzeichnet, dass** die ersten und zweiten plattenförmigen Befestigungsabschnitte (5,6) im Wesentlichen X-förmig zueinander ausgerichtet sind, wobei im Bereich des Kreuzungspunktes der Befestigungsabschnitte (5,6) im Eckverbindungselement (4) ein verstärkter Kernabschnitt (9) vorgesehen ist, welcher eine Verbindungsposition (10) für ein diagonales Spannelement (11) aufweist.

3. Baukastensystem für die Herstellung von modularen Strukturen nach Anspruch 1 oder 2, **dadurch gekennzeichnet, dass** die waagrecht anordenbaren länglichen Profilelemente (1,2), die mit den ersten plattenförmigen Befestigungsabschnitten (5) verbindbar sind, Hohlprofile mit im gesamten Bereich gleicher Wandstärke sind, wobei die Hohlprofile einen doppel-T-förmigen Querschnitt aufweisen mit einem im Einbauzustand senkrecht ausgerichteten mittleren Abschnitt (12), in welchen die ersten plattenförmigen Befestigungsabschnitte (5) einführbar sind, und mit jeweils am mittleren Abschnitt (12) angrenzenden Kopf- (13) bzw. Fußabschnitten (14), welche die Querbalken der doppel-T-Form ausbilden.

4. Baukastensystem für die Herstellung von modularen Strukturen nach Anspruch 3, **dadurch gekennzeichnet, dass** der Fußabschnitt (14) der waagrecht anordenbaren länglichen Profilelemente (2), die mit den ersten plattenförmigen Befestigungsabschnitten (5) verbindbar sind, und welche speziell im Bereich eines Deckenelements (32) einsetzbar sind, in vertikaler Richtung eine geringere Höhe aufweisen als der Kopfabschnitt (13) des betreffenden länglichen Profilelements (2).

5. Baukastensystem für die Herstellung von modularen Strukturen nach einem der Ansprüche 1 bis 4, **dadurch gekennzeichnet, dass** die senkrecht anordenbaren länglichen Profilelemente (3), die mit den zweiten plattenförmigen Befestigungsabschnitten (6) verbindbar sind, Hohlprofile mit im Wesentlichen rechteckigem, bevorzugt quadratischem Querschnitt sind, wobei zwei benachbarte Seitenwände (15,16) des Hohlprofils im Einbauzustand im Endabschnitt des Profilelements (3) an den zweiten plattenförmigen Befestigungsabschnitten (6) anliegen und die beiden anderen Seitenwände (17,18) jeweils beidseitig hinterschnittene Längsnuten (19) aufweisen.

6. Baukastensystem für die Herstellung von modularen Strukturen nach Anspruch 5, **dadurch gekennzeichnet, dass** Verbindungselemente (20) zum Verbinden der senkrecht anordenbaren länglichen Profilelemente (3) mit benachbarten senkrecht anordenbaren länglichen Profilelementen (3) vorgesehen sind, wobei das Verbindungselement (20) ein Längsprofil umfasst, welches im Querschnitt zwei randseitige verbreiterte Abschnitte (21) aufweist, die formschlüssig in die beidseitig hinterschnittenen Nuten (19) zweier benachbarter senkrecht anordenbarer länglicher Profilelemente (3) einsetzbar sind.

7. Baukastensystem für die Herstellung von modularen Strukturen nach einem der Ansprüche 1 bis 6, **dadurch gekennzeichnet, dass** ein Modulverbindungselement (22) zur vertikalen Verbindung zweier obereinander angeordneter senkrecht anordenbarer länglicher Profilelemente (3) vorgesehen ist, wobei das Modulverbindungselement (22) einen in das Hohlprofil der länglichen Profilelemente (3) einsetzbaren zentralen Dorn (23) umfasst, und wobei zwei Lastverteilplatten (24) mit zentralen Durchbrüchen (25) im Einbauzustand den zentralen Dorn (23) in etwa mittig kragenförmig umgeben und an den stirnseitigen Enden der beiden verbundenen länglichen Profilelemente (3) anliegen.

8. Baukastensystem für die Herstellung von modularen Strukturen nach Anspruch 7, **dadurch gekennzeichnet, dass** zwischen den beiden Lastverteilplatten (24) eine weitere Platte (26) aus einem elastischen und/oder wärmedämmenden Material angeordnet ist, **und dass** der oberhalb der Lastverteilplatten (24) liegende Abschnitt (27) des zentralen Dorns (23) von einer oben geschlossenen Hülse (28) aus elastischem und/oder wärmedämmenden Material umgeben ist.

9. Baukastensystem für die Herstellung von modularen Strukturen nach einem der Ansprüche 1 bis 8, **dadurch gekennzeichnet, dass** innerhalb der als Bodenelement (31), Deckenelement (32) und/oder Wandelement ausgeformten Moduleinheiten Leerverrohrungen (29) für den Einbau von Elektro-, Heiz-, Kühl- oder Wasserleitungen vorgesehen sind, wobei die Leerverrohrungen (29) rasterförmig durch die jeweilige Moduleinheit von einem länglichen Profilelement (1,2,3) zum gegenüberliegenden und/oder bogenförmig zu einem benachbarten länglichen Profilelement (1,2,3) hin verlaufen.

## Claims

1. Modular system for the construction of modular structures in the form of prefabricated components for buildings, comprising elongated profile elements (1, 2, 3), corner connection elements (4) and clamping jaws (8), the elongated profile elements are connectable to the corner connection elements (4) to form interconnectable modular units, the modular units being suitable for forming floor elements (31), ceiling elements (32) and/or wall elements, wherein the corner connection elements (4) comprise two first plate-shaped fastening sections (5) oriented at right angles to one another and two second plate-shaped fastening sections (6) oriented at right angles to one another, and wherein the first plate-shaped fastening sections (5) can each be inserted into the ends of an elongated profile element (1, 2) associated with the respective fastening section (5) and secured thereto, and wherein, furthermore, the second plate-shaped fastening sections (6) form a common inner edge (7), within which a further elongated profile element (3) can be positioned with an end section, wherein the further elongated profile element (3) can be secured to the two second plate-shaped fastening sections (6) by means of two clamping jaws (8) insertable into the profile element (3).

2. Modular system for the construction of modular structures according to claim 1, **characterized in that** the first and second plate-shaped fastening sections (5, 6) are oriented substantially in an X-shape relative to one another, wherein, in the area of the intersection of the fastening sections (5, 6) in the corner connection element (4) a reinforced core section (9) is provided, which has a connection position (10) for a diagonal tensioning element (11).

3. Modular system for the construction of modular structures according to claim 1 or 2, **characterized in that** the elongated profile elements (1, 2), which can be arranged horizontally and are connectable to the first plate-shaped fastening sections (5), are hollow profiles with a uniform wall thickness throughout, wherein the hollow profiles have a double-T-shaped cross-section with a central section (12) arranged vertically in the mounting condition, into which the first plate-shaped fastening sections (5) can be inserted, and with head (13) and foot (14) sections respectively adjoining the central section (12), which form the cross-beams of the double-T shape.

4. Modular system for the construction of modular structures according to claim 3, **characterized in that** the foot section (14) of the elongate profile elements (2), which can be arranged horizontally, which can be connected to the first plate-shaped fastening sections (5), and which are specifically designed for use in the region of a ceiling element (32), have a lower height in the vertical direction than the head section (13) of the relevant elongated profile element (2).

5. Modular system for the construction of modular structures according to any one of claims 1 to 4, **characterized in that** the elongated profile elements (3), which can be arranged vertically and which can be connected to the second plate-shaped fastening sections (6), are hollow profiles with a substantially rectangular, preferably square, cross-section, wherein two adjacent side walls (15, 16) of the hollow profile, when installed, abut against the second plate-shaped fastening sections (6) in the end section of the profile element (3), and the other two side walls (17, 18) each have longitudinal grooves (19) with undercuts on both sides.

6. Modular system for the construction of modular structures according to claim 5, **characterized in that** connection elements (20) for connecting the vertically arranged elongated profile elements (3) to adjacent vertically arranged elongated profile elements (3) are provided, wherein the connection element (20) comprises a longitudinal profile which, in cross-section, has two widened sections (21) at the edges, which can be inserted with a positive fit into the double-sided undercut grooves (19) of two adjacent, vertically arranged elongated profile elements (3).

7. Modular system for the construction of modular structures according to any one of claims 1 to 6, **characterized in that** a module connecting element (22) is provided for the vertical connection of two vertically arranged elongated profile elements (3) arranged one above the other, wherein the module connecting element (22) comprises a central pin (23) which can be inserted into the hollow profile of the elongated profile elements (3), and wherein two loaddistribution plates (24) with central openings (25) surround the central pin (23) approximately centered in a collar-like manner when installed and abut against the end faces of the two connected elongated profile elements (3).

8. Modular system for the construction of modular structures according to claim 7, **characterized in that** a further plate (26) made of an elastic and/or thermally insulating material is assembled between the two load distribution plates (24), and that the section (27) of the central pin (23) lying above the load distribution plates (24) is surrounded by a sleeve (28) made of elastic and/or thermally insulating material, which is closed at the top.

9. Modular system for the construction of modular structures according to any one of claims 1 to 8, **characterized in that**, within the modular units formed as floor element (31), ceiling element (32) and/or wall element, empty conduits (29) are provided for the installation of electrical, heating, cooling or water lines, wherein the empty conduits (29) run in a grid-like pattern through the respective module unit from one elongated profile element (1, 2, 3) to the opposite one and/or in an arched manner towards an adjacent elongated profile element (1, 2, 3).

## Revendications

1. Système modulaire destiné à la fabrication de structures modulaires sous forme d'éléments préfabriqués pour bâtiments, comprenant des éléments profilés allongés (1, 2, 3), des éléments de liaison d'angle (4) et des mâchoires de serrage (8), les éléments profilés allongés pouvant être reliés, au moyen des éléments de liaison d'angle (4), pour former des unités modulaires pouvant être reliées entre elles, les unités modulaires étant adaptées à la réalisation d'éléments de plancher (31), d'éléments de plafond (32) et/ou d'éléments de paroi, les éléments de liaison d'angle (4) comprenant deux premières sections de fixation (5) en forme de plaque orientées à angle droit l'une par rapport à l'autre et deux secondes sections de fixation (6) en forme de plaque orientées à angle droit l'une par rapport à l'autre, les premières sections de fixation (5) en forme de plaque pouvant chacune être introduites dans les extrémités d'un élément profilé allongé (1, 2) associé à la section de fixation (5) respective et pouvant être fixées à celui-ci, et les secondes sections de fixation (6) en forme de plaque formant en outre une arête intérieure commune (7), dans laquelle un autre élément profilé allongé (3) peut être disposé par une section d'extrémité, l'autre élément profilé allongé (3) pouvant être fixé aux deux secondes sections de fixation (6) en forme de plaque au moyen de deux mâchoires de serrage (8) pouvant être introduites dans l'élément profilé (3).

2. Système modulaire destiné à la fabrication de structures modulaires selon la revendication 1, **caractérisé en ce que** les premières et secondes sections de fixation (5, 6) en forme de plaque sont orientées sensiblement en forme de X les unes par rapport aux autres, une section centrale renforcée (9) étant prévue dans l'élément de liaison d'angle (4) dans la région du point d'intersection des sections de fixation (5, 6), ladite section centrale renforcée présentant une position de raccordement (10) pour un élément de tension diagonal (11).

3. Système modulaire destiné à la fabrication de structures modulaires selon la revendication 1 ou 2, **caractérisé en ce que** les éléments profilés allongés (1, 2), pouvant être disposés horizontalement et pouvant être reliés aux premières sections de fixation (5) en forme de plaque, sont des profilés creux présentant une épaisseur de paroi identique sur toute leur étendue, les profilés creux présentant une section transversale en forme de double T avec une section médiane (12), orientée verticalement à l'état monté, dans laquelle les premières sections de fixation (5) en forme de plaque peuvent être introduites, et avec des sections de tête (13) et de pied (14) respectivement adjacentes à la section médiane (12), lesquelles forment les traverses de la forme en double T.

4. Système modulaire destiné à la fabrication de structures modulaires selon la revendication 3, **caractérisé en ce que** la section de pied (14) des éléments profilés allongés (2), pouvant être disposés horizontalement, pouvant être reliés aux premières sections de fixation (5) en forme de plaque et étant spécialement utilisables dans la région d'un élément de plafond (32), présente, dans la direction verticale, une hauteur inférieure à celle de la section de tête (13) de l'élément profilé allongé (2) concerné.

5. Système modulaire destiné à la fabrication de structures modulaires selon l'une quelconque des revendications 1 à 4, **caractérisé en ce que** les éléments profilés allongés (3), pouvant être disposés verticalement et pouvant être reliés aux secondes sections de fixation (6) en forme de plaque, sont des profilés creux présentant une section transversale sensiblement rectangulaire, de préférence carrée, deux parois latérales adjacentes (15, 16) du profilé creux reposant, à l'état monté, dans la section d'extrémité de l'élément profilé (3), contre les secondes sections de fixation (6) en forme de plaque, et les deux autres parois latérales (17, 18) présentant chacune des rainures longitudinales (19) en contre-dépouille des deux côtés.

6. Système modulaire destiné à la fabrication de structures modulaires selon la revendication 5, **caractérisé en ce que** des éléments de liaison (20) sont prévus pour relier les éléments profilés allongés (3) pouvant être disposés verticalement, à des éléments profilés allongés (3), adjacents pouvant être disposés verticalement, l'élément de liaison (20) comprenant un profilé longitudinal qui présente, en section transversale, deux sections élargies (21) situées au niveau des bords, lesquelles peuvent être insérées par complémentarité de forme dans les rainures (19) en contre-dépouille des deux côtés de deux éléments profilés allongés (3) adjacents pouvant être disposés verticalement.

7. Système modulaire destiné à la fabrication de structures modulaires selon l'une quelconque des revendications 1 à 6, **caractérisé en ce qu'**un élément de liaison de modules (22) est prévu pour la liaison verticale de deux éléments profilés allongés (3), pouvant être disposés verticalement et agencés l'un au-dessus de l'autre, l'élément de liaison de modules (22) comprenant un mandrin central (23) pouvant être introduit dans le profilé creux des éléments profilés allongés (3), et deux plaques de répartition de charge (24), pourvues d'ouvertures centrales (25), entourant, à l'état monté, le mandrin central (23) sensiblement dans sa région médiane à la manière d'une collerette et reposant contre les extrémités frontales des deux éléments profilés allongés (3) reliés.

8. Système modulaire destiné à la fabrication de structures modulaires selon la revendication 7, **caractérisé en ce qu'**une autre plaque (26) constituée d'un matériau élastique et/ou thermiquement isolant est disposée entre les deux plaques de répartition de charge (24), **et en ce que** la section (27) du mandrin central (23) située au-dessus des plaques de répartition de charge (24) est entourée d'un manchon (28), fermé à son extrémité supérieure, constitué d'un matériau élastique et/ou thermiquement isolant.

9. Système modulaire destiné à la fabrication de structures modulaires selon l'une quelconque des revendications 1 à 8, **caractérisé en ce que** des conduits vides (29) destinés à l'installation de conduites électriques, de chauffage, de refroidissement ou d'eau sont prévus à l'intérieur des unités modulaires réalisées sous forme d'élément de plancher (31), d'élément de plafond (32) et/ou d'élément de paroi, les conduits vides (29) s'étendant en forme de trame à travers l'unité modulaire respective depuis un élément profilé allongé (1, 2, 3) jusqu'à l'élément profilé opposé et/ou suivant un tracé courbe jusqu'à un élément profilé allongé (1, 2, 3) adjacent.
